# EUROPÄISCHE PATENTSCHRIFT

(11) **EP 2 220 467 B1**
(45) Veröffentlichungstag und Bekanntmachung des Hinweises auf die Patenterteilung: **15.07.2015**
(21) Anmeldenummer: 08857277.1
(22) Anmeldetag: 15.10.2008
(51) Int. Cl.: G01G 21/28

(54) **WAAGE**
BALANCE
BALANCE

(30) Priorität: 04.12.2007 DE 102007058330
(43) Veröffentlichungstag der Anmeldung: 25.08.2010
(73) Patentinhaber: Sartorius Lab Instruments GmbH & Co. KG, 37075 Göttingen (DE)
(72) Erfinder: LAUBSTEIN, Michael, 37077 Göttingen (DE); LAUKE, Jürgen, 37124 Rosdorf (DE)
(86) Internationale Anmeldenummer: PCT/EP2008/008702
(87) Internationale Veröffentlichungsnummer: WO 2009/071147

(56) Entgegenhaltungen:
- WO-A-00/37899
- DE-A1- 10 146 421
- DE-C- 592 831
- DE-U1- 8 803 709

## Beschreibung

Die Erfindung betrifft eine Waage mit mindestens einer einen Antrieb aufweisenden Verstelleinrichtung.

Insbesondere in Präzisions- oder Analysewaagen werden für unterschiedliche Verstellfunktionen Elektromotoren, die meist als Gleichstrommotoren ausgebildet sind, eingesetzt.

Entweder werden dabei für die unterschiedlichen Verstellfunktionen unterschiedlich dimensionierte Motoren eingesetzt oder wenn aus Fertigungs- bzw. Kostengründen gleiche Motoren verwendet werden sollen, sind diese nicht optimal für unterschiedliche Verwendungszwecke ausgelegt.

So ist aus der DE 90 06 644 U1 eine Waage mit motorisch bewegtem Windschutz bekannt. Dabei wird ein Wandelement eines die Waagschale umschließenden Wägeraumes von einem Elektromotor bewegt. Ein Sensor dient zur Erkennung der Stellung des Wandelementes.

Bei einer bekannten automatischen Gewichtsschaltung einer Waage liegt ein Justiergewicht auf einer Gewichtsauflage auf, die durch Kippen um eine Kippachse absenkbar oder anhebbar ist. Parallel zur Kippachse ist dabei eine Drehachse mit einer exzentrisch gelagerten Kurvenscheibe angeordnet. Ein Anschlag der rechtwinklig ausgebildeten Gewichtsauflage wird dabei durch eine Feder gegen die Kurvenscheibe gedrückt. Die Drehachse wird über ein Getriebe von einem Gleichstrommotor angetrieben. Zur Lagefeststellung der exzentrisch gelagerten Kurvenscheibe bzw. der Gewichtsauflage sind zwei Scheiben mit Steuernocken an der Drehachse angeordnet, die in den vorgesehen Endstellungen einen ihnen zugeordneten Schalter betätigen. Obwohl sich diese Gewichtsschaltung grundsätzlich bewährt hat, ist sie durch die Steuernocken mit Schaltern noch relativ kostenintensiv und durch den verwendeten Elektromotor mit Getriebe noch relativ voluminös.

Eine motorisch angetriebene Gewichtsschaltung sowie eine Arretierung ist beispielsweise auch aus der DE 42 35 250 C1 bekannt. Eine Waage mit einem motorgetriebenen beweglichen Anschlag ist beispielsweise aus der DE 198 28 515 A1 bekannt. Diese Waage nach dem Prinzip der elektromagnetischen Kraftkompensation weist einen vertikal beweglichen Lastaufnehmer, einen Lagesensor, einen Regelverstärker und eine Spule in einem Magnetfeld eines Permanentmagneten, sowie mindestens einen Anschlag, der die Bewegung des Lastaufnehmers nach unten begrenzt, mindestens einen Anschlag, der die Bewegung des Lastaufnehmers nach oben begrenzt, und eine elektronische Auswerteeinheit auf. Mindestens einer der Anschläge ist beweglich. Der bewegliche Anschlag wird mit Hilfe des Lagensensors so angesteuert, dass der Lastaufnehmer möglichst in derselben Lage gehalten wird wie im normalen Wägebetrieb.

Weiterhin ist aus der DE 28 41 996 C2 eine Gewichtsschaltung für eine Balkenwaage, insbesondere für eine Analysenwaage, mit mehreren Nockenwellen zum Anheben/Absenken der Gewichte und mit einem über Sensoren gesteuerten elektromotorischen Antrieb der Nockenwellen bekannt.

Eine Analysenwaage mit einem pneumatischen Antrieb ist aus DE8803709U bekannt.

Den bekannten Waagen gemeinsam ist, dass die verwendeten Elektromotoren relativ großvolumig sind und relativ aufwändige Getriebe benötigen.

Weiterhin nachteilig ist, dass durch eine bei den Elektromotoren auftretende Verlustleistung ein unerwünschter Wärmeeintrag erfolgen kann. Auch können durch die Elektromotoren unerwünscht hohe Magnetfelder auftreten. Durch den Einsatz von Elektromotoren kann es zudem zu Problemen beim Einsatz in explosionsgeschützten Bereichen kommen.

Aufgabe der vorliegenden Erfindung ist es daher, die Verstelleinrichtungen zu verbessern. Insbesondere sollen sie möglichst kleinvolumig ausgebildet und möglichst vielseitig in einer Waage einsetzbar sein. Weiterhin soll ein unerwünschter Wärmeeintrag durch die Elektromotoren weitgehend vermieden werden. Auf Getriebe soll möglichst verzichtet werden. Insgesamt soll der Aufbau solcher Verstelleinrichtungen verbessert werden.

Diese Aufgabe wird mit der Merkmalskombination des Anspruchs 1 gelöst. Vorteilhafte Weiterbildungen der Erfindung sind Gegenstand der abhängigen Ansprüche.

Der Fachmann war bisher bestrebt, auch die Waagen, die insbesondere zur Verwendung in automatisierten Anlagen vorgesehen sind, mit Stellvorrichtungen zu versehen, die jeweils einen eigenen Elektroantrieb aufweisen. Der Fachmann war dieser Vorstellung so verhaftet, dass er lediglich versucht hat, Stellvorrichtungen mit eigenen anderen Antrieben als Elektromotoren, beispielsweise Piezoantrieben, zu nutzen.

Es hat sich nun als besonders günstig erwiesen, in Anlagen für die ohnehin eine pneumatische oder hydraulische Druckquelle mit Druck als Hilfsenergie zur Verfügung steht, Waagen einzubinden, deren Antrieb der Verstelleinrichtung als fluidischer Antrieb ausgebildet ist. Solche Waagen können auch in Laborräumen eingesetzt werden, die an eine zentrale Druckversorgung angeschlossen sind.

Die Verstelleinrichtungen und ihre Antriebe lassen sich relativ kleinvolumig ausbilden und durch entsprechende Ventile relativ einfach an unterschiedliche Aufgaben anpassen. Zur Versorgung mit Druck benötigt die Waage lediglich einen entsprechenden Druckanschluss. Auf Getriebe kann insbesondere bei geradlinigen Bewegungen, wie Schiebebewegungen, weitgehend verzichtet werden. Es entsteht zudem kein von den Elektromotoren bekannter Wärmeeintrag in die Waage, was insbesondere bei der Verwendung in als Komparatoren ausgebildeten Waagen von Vorteil ist.

Grundsätzlich ist die Verstelleinrichtung auch durch Zusammenwirken eines externen Positionssensors mit dem sie steuernden Mikrocontroller oder Steuereinheit regelbar.

Gemäß einer bevorzugten Ausführungsform der Erfindung ist der Antrieb als ein einseitiger, gegen eine Feder arbeitender Druckzylinder ausgebildet, der einen längsverschieblichen Aktuator aufweist. Dadurch kann zum Verstellen in der entgegengesetzten Richtung zum einen auf einen zweiten einseitigen Druckzylinder verzichtet werden und zum anderen wird durch die Feder in einem drucklosen Zustand eine vorgegebene Position sichergestellt.

Nach einer weiteren bevorzugten Ausführungsform der Erfindung ist der Antrieb als ein zweiseitiger Druckzylinder mit einem längsverschieblichen Aktuator ausgebildet. Dadurch kann ebenfalls zum Verstellen in der entgegengesetzten Richtung auf einen zweiten Druckzylinder verzichtet werden. Es wird lediglich der Arbeitsdruck von einer ersten Kammer auf die auf der anderen Seite des den Aktuator bewegenden Kolbens liegenden zweiten Kammer umgeschaltet.

Gemäß einer weiteren bevorzugten Ausführungsform ist dem Antrieb mindestens ein Steuerventil vorgelagert. Über das Steuerventil lässt sich der Aktuator bewegen und, soweit das Steuerventil regelbar ist, seine Geschwindigkeit regeln bzw. steuern. Um ein sanftes Anlaufen und Auslaufen des Aktuators sicherzustellen ist der Antrieb mit einem Dämpfungsglied gekoppelt, das beispielsweise als ein Drosselventil ausgebildet ist.

Gemäß einer weiteren bevorzugten Ausführungsform der Erfindung ist die Verstelleinrichtung zum Bewegen eines Wandelementes eines Windschutzes ausgebildet. Damit kann einfach und kostengünstig ein Wandelement bzw. eine Windschutztür bewegt werden.

Nach einer bevorzugten Ausführungsform der Erfindung ist die Verstelleinrichtung zur Verstellung mindestens eines Gewichtes in einer Gewichtsschaltung ausgebildet. Dabei wird das Gewicht, das auf einer Gewichtsauflage aufliegt, welche durch die Verstelleinrichtung absenkbar und/oder anhebbar ist, auf einen Krafteinleitungspunkt der Waage abgelegt bzw. angehoben.

Um auch relativ schwere Gewichte bewegen zu können, kann die Gewichtsauflage durch Kippen um eine Kippachse abgesenkt oder angehoben werden. Vorteilhaft kann dabei auf eine parallel zur Kippachse angeordnete Drehachse mit einer exzentrisch gelagerten Kurvenscheibe und ein Getriebe zwischen Antrieb und Drehachse verzichtet werden.

Nach einer bevorzugten Ausführungsform der Erfindung wird ein Lastaufnehmer in einer Spülstellung (wash-down- oder Spülfunktion) von dem Aktuator der Verstelleinrichtung mit einem dem Waagengehäuse zugewandten rückwärtigen Dichtrand gegen eine zwischen Lastaufnehmer und Waagengehäuse angeordnete Dichtung dichtend angedrückt. Grundsätzlich ist es auch möglich, den rückwärtigen Rand des Lastaufnehmers, beispielsweise einer Waagschale, als Dichtung auszubilden und mit Hilfe des Aktuators dichtend gegen das benachbarte Waagengehäuse zu drücken.

Dadurch lässt sich einfach und zuverlässig verhindern, dass beim Reinigen bzw. Spülen der Waage zwischen Lastaufnehmer und Gehäuseoberfläche Reinigungs- oder Spülflüssigkeit in die Waage bzw. ihr Gehäuse eindringen kann.

Nach einer weiteren bevorzugten Ausführungsform weist der Lastaufnehmer an seiner ihn tragenden Aufnehmerachse einen Anschlag bzw. Mitnehmer auf, an den der Aktuator in der Spülstellung parallel zur Aufnehmerachse ziehend mit einem Anschlag bzw. Mitnehmer anschlägt.

Gemäß einer bevorzugten Ausführungsform ist die Verstelleinrichtung als eine Transportsicherung ausgebildet, die in einem drucklosen Zustand durch Federkraft die Waage arretiert. Zum Arretieren greift der Aktuator der Verstelleinrichtung in eine entsprechende Öffnung des Lastaufnehmers arretierend ein. Zum Arretieren kann der Lastaufnehmer von dem Aktuator der Verstelleinrichtung aber auch gegen einen Anschlag gedrückt werden.

Zusätzlich oder alternativ kann auch der Aktuator einer weiteren Verstelleinrichtung in eine entsprechende Öffnung eines Lastübertragungshebels des Wägesystems arretierend eingreifen. Zum Arretieren des Lastübertragungshebels des Wägesystems kann aber auch der Lastübertragungshebel von dem Aktuator gegen einen Anschlag gedrückt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine Seitenansicht einer Waage mit einem verschiebbaren Wandelement eines Windschutzes in verkleinerter Darstellung,
- Figur 2:: eine Rückansicht des verschiebbaren Wandelementes von Figur 5 im Schnitt und Ausriss,
- Figur 3:: eine Draufsicht auf eine Gewichtsschaltung mit einer kippbaren Gewichtsauflage,
- Figur 4:: eine Seitenansicht der Gewichtsauflage von Figur 3 im Ausriss, teilweise im Schnitt,
- Figur 5:: eine schematische Seitenansicht einer weiteren Gewichtsauflage,
- Figur 6:: eine schematische Seitenansicht einer Waage mit Lastaufnehmer in Spülstellung,
- Figur 7:: eine schematische Seitenansicht einer Waage in einem arretierten Zustand,
- Figur 8:: eine schematische Darstellung einer Verstelleinrichtung mit einem zweiseitig arbeitenden Druckzylinder als Antrieb und
- Figur 9:: eine schematische Darstellung einer Verstelleinrichtung mit einem einseitig gegen eine Feder arbeitenden Druckzylinder als Antrieb.

Eine Waage 1 weist mindestens eine Verstelleinrichtung 2 auf. Die Verstelleinrichtung 2 besteht dabei im Wesentlichen aus einem Aktuator 3, der von einem fluidischen Antrieb 4 angetrieben wird.

Der Antrieb 4 wird von einem Druckzylinder 5 gebildet, indem ein längsverschieblicher Kolben 6 durch Druckbeaufschlagung mit Druck aus einer außerhalb der Waage 1 angeordneten nicht dargestellten Druckquelle über einen Druckanschluss 7 druckbeaufschlagt wird.

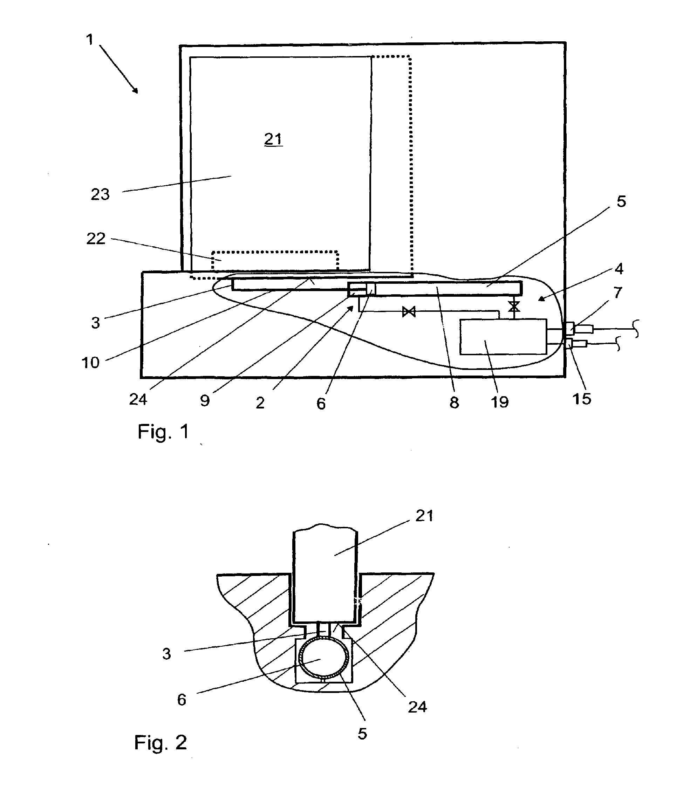

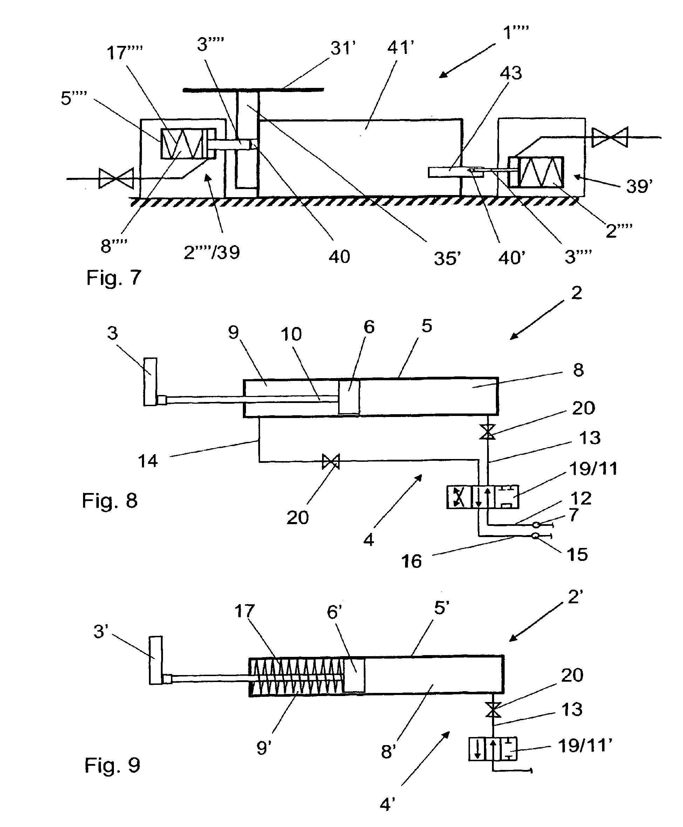

Der Druckzylinder 5 kann dabei entsprechend den Figuren 1 und 8 als ein zweiseitiger Druckzylinder ausgebildet sein, der vom Kolben 6 in eine erste Kammer 8 und eine zweite Kammer 9 unterteilt wird. Dabei wird bei einem Vorhub die erste Kammer 8 und bei einem Rückhub die zweite Kammer 9 mit Druck beaufschlagt. Dabei weist der Kolben 6 eine Kolbenstange 10 auf, an deren dem Kolben 6 abgewandtem freien Ende der Aktuator 3 angeordnet ist. Ein als Mehrwegeventil 11 ausgebildetes Steuerventil 19 verbindet eine vom Druckanschluss 7 kommende Druckleitung 12 wahlweise mit einer ersten Leitung 13, die zur ersten Kammer 8 führt und mit einer zweiten Leitung 14, die zur zweiten Kammer 9 führt. Soweit die erste Leitung 13 mit der Druckleitung 12 verbunden ist, ist die zweite Leitung 14 über das Mehrwegeventil 11 über einen Rückleitungsanschluss 15 mit einer Rückleitung 16 verbunden. Im Falle eines pneumatischen Antriebs kann die über die Rückleitung 16 rückgeführte Druckluft in die Atmosphäre abgeleitet werden, während im Fall eines hydraulischen Antriebs die über die Rückleitung 16 rückgeführte Hydraulikflüssigkeit in einen nicht dargestellten Hydrauliktank rückgeführt wird.

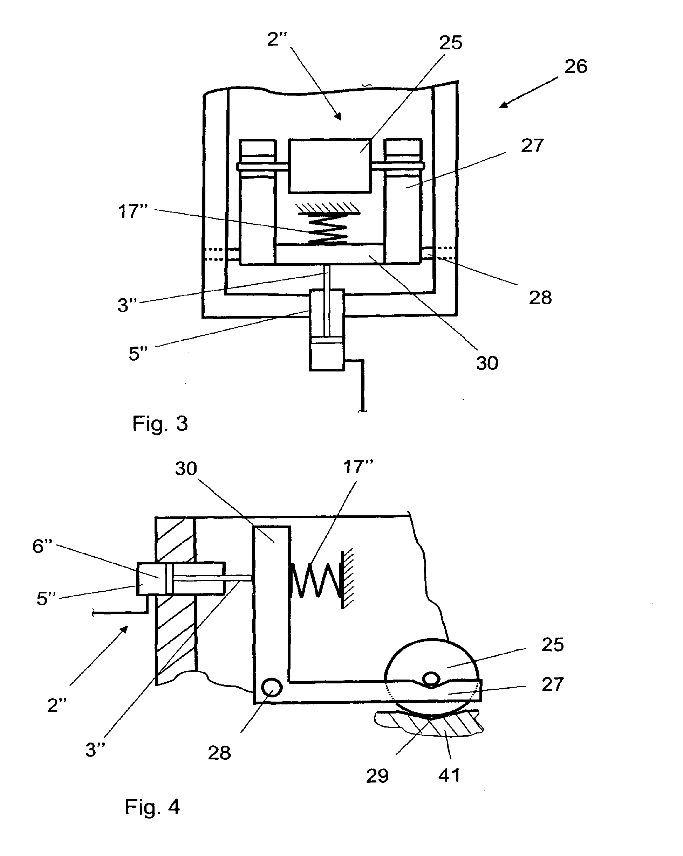

Entsprechend den Figuren 3 bis 7 und Figur 9 ist der Druckzylinder 5', 5'', 5''' als ein einseitiger, gegen eine Feder 17, 17'', 17''', 17'''', 18 arbeitender Druckzylinder 5', 5'', 5''' ausgebildet.

Entsprechend Figur 9 ist die Feder 17 als Druckfeder ausgebildet und in der zweiten Kammer 9' angeordnet. Entsprechend Figur 7 ist die Feder 17'''' als Druckfeder ausgebildet und in der ersten Kammer 8'''' angeordnet sein.

Entsprechend den Figuren 3 und 4 kann die Feder 17'' auch außerhalb des Druckzylinders 5'' dem Kolben 6'' bzw. Aktuator 3'' entgegenwirkend angeordnet sein.

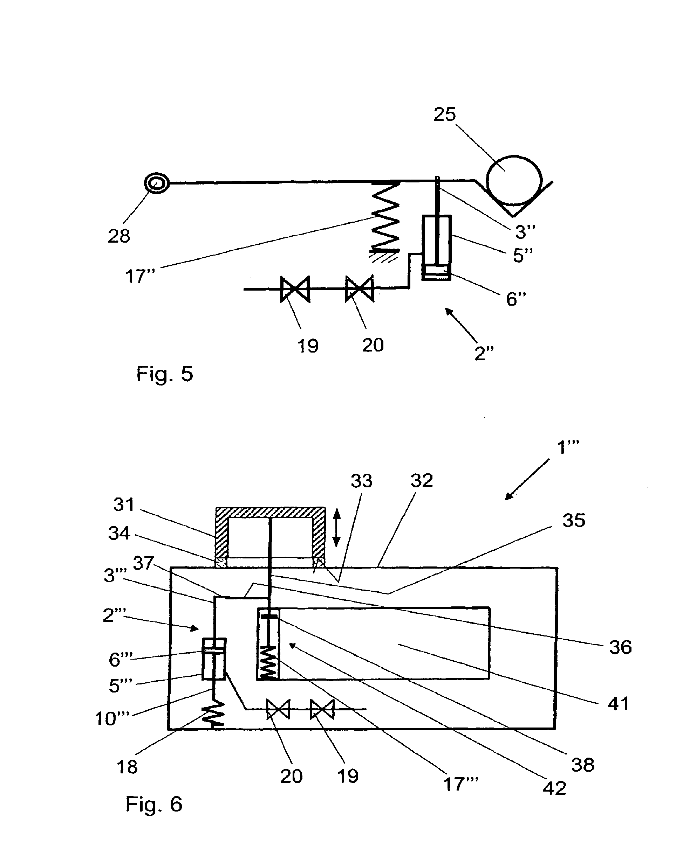

Entsprechend Figur 5 ist die Feder 18 als eine dem Kolben 6'' entgegenwirkende Zugfeder ausgebildet, die parallel zu dem Druckzylinder 5'' angeordnet ist.

Gemäß Figur 6 ist der Druckzylinder 5''' so ausgebildet, dass dessen Kolben 6''' eine beidseitige Kolbenstange 10''' aufweist, an deren dem Aktuator 3''' abgewandten zweiten Ende, die als Zugfeder ausgebildete Feder 18 dem Kolben 6''' entgegenwirkend angreift.

Dem fluidischen Antrieb 4, 4', 4'', 4''' ist ein Steuerventil 19 vorgelagert, das gemäß Figur 1, 8 und 9 als ein Mehrwegeventil 11, 11' ausgebildet ist.

In den Leitungen 13, 14 sind Drosselventile 20 als Dämpfungsglieder angeordnet.

Gemäß den Figuren 1 und 2 wird die Verstelleinrichtung 2 zum translatorischen Bewegen eines Wandelementes 21 eines Windschutzes einer Waage 1 verwendet. Der Windschutz bildet dabei einen eine Waagschale 22 umschließenden Wägeraum 23, der durch Verschieben des Wandelementes 21 zugängig wird. An einem in vertikaler Richtung unteren Ende ist an der Unterseite 24 des Wandelementes 21 der Aktuator 3 mit dem Wandelement 21 verbunden, das über die Verstelleinrichtung 2 bzw. den an der Kolbenstange 10 angeordneten Aktuator 3 verschiebbar ist.

Gemäß der Ausführungsform nach den Figuren 3 und 4 und nach der Ausführungsform der Figur 5 ist die Verstelleinrichtung 2'' zum Verstellen eines Gewichtes 25 in einer Gewichtsschaltung 26 ausgebildet. Das Geweicht 25 liegt dabei auf einer Gewichtsauflage 27 auf, die durch die Verstelleinrichtung 2'' durch Kippen um eine Kippachse 28 absenkbar und in entgegensetzter Richtung anhebbar ist. Entsprechend wird durch Absenken der Gewichtsauflage 27 das Gewicht 25 auf einen Krafteinleitungspunkt 29 bzw. eine Krafteinleitungsauflage abgelegt. Die Gewichtsauflage 27 ist dabei als ein gabelförmiger winkelhebel ausgebildet, an dessen abgewinkelten Ende 30 der Aktuator 3'' der Verstelleinrichtung 2'' einerseits und die Druckfeder 17'' andererseits angreift. Gemäß der Ausführungsform von Figur 5 greifen deren Aktuator 3'' und die Feder 18 auf der gleichen Seite der Gewichtsauflage 27 an. Dabei ist die Feder 18 als eine Druckfeder ausgebildet.

Gemäß dem Ausführungsbeispiel von Figur 6 weist die Waage 1''' einen Lastaufnehmer 31 auf, der in einer Spülstellung von dem Aktuator 3''' der Verstelleinrichtung 2''' mit einem einem Waagengehäuse 32 zugewandten rückwärtigen Dichtrand 33 gegen eine zwischen Lastaufnehmer 31 und Waagengehäuse 32 angeordnete Dichtung 34 dichtend angedrückt wird. Hierzu weist der Lastaufnehmer 31 an seiner ihn tragenden Aufnehmerachse 35 einen Anschlag 36 auf, an den der Aktuator 3''' in der Spülstellung parallel zur Aufnehmerachse 35 ziehend mit einem Aktuatoranschlag 37 anschlägt und dabei eine Überlastsicherung 42 eines Wägesystems 41 betätigt, in dem er deren an der Aufnehmerachse 35 angeordneten Anschlag 38 aus seiner Anschlagsposition in Richtung der Feder 17''' zieht, die als Druckfeder ausgebildet ist und als Überlastfeder wirkt. Hierzu muss die Feder 18, die als eine Zugfeder ausgebildet ist und auf die Kolbenstange 10''' ziehend einwirkt, eine größere Federkraft aufweisen als die Feder 17''' damit im drucklosen Zustand des Druckzylinders 5''' die Überlastsicherung 42 betätigt wird.

Nach dem Ausführungsbeispiel von Figur 7 ist die Verstelleinrichtung 2'''' als eine Transportsicherung 39 ausgebildet, die einem drucklosen Zustand des Druckzylinders 5'''' durch Federkraft der Feder 17'''' die Waage 1'''' arretiert. Hierzu greift zum Arretieren der Aktuator 3'''' der Verstelleinrichtung 2'''' in eine entsprechende Öffnung 40 der Aufnehmerachse 35' des Lastaufnehmers 31' arretierend ein.

Eine weitere Transportsicherung 39'ist entsprechend aufgebaut. Hier greift zum Arretieren der Aktuator (3'''') der Verstelleinrichtung (2'''') in eine entsprechende Öffnung (40') eines Lastübertragungshebels 43 eines Wägesystems 41' arretierend ein.

### Bezugszeichenliste

- 1, 1', 1'', 1''', 1'''': Waage
- 2, 2', 2'', 2''', 2'''': Verstelleinrichtung
- 3, 3', 3', 3''', 3'''': Aktuator
- 4, 4',: fluidischen Antrieb
- 5, 5', 5'', 5''', 5'''': Druckzylinder
- 6, 6', 6'', 6''': Kolben
- 7: Druckanschluss
- 8, 8', 8'''': erste Kammer von 1
- 9, 9': zweite Kammer von 1
- 10, 10''': Kolbenstange
- 11, 11': Mehrwegeventil
- 12: Druckleitung
- 13: erste Leitung von 8
- 14: zweite Leitung von 8
- 15: Rückleitungsanschluss
- 16: Rückleitung
- 17, 17'', 17''', 17'''': Feder
- 18: Feder
- 19: Steuerventil
- 20: Drosselventil
- 21: Wandelement von 1
- 22: Waagschale
- 23: Wägeraum
- 24: Unterseite von 21
- 25: Gewicht
- 26: Gewichtsschaltung
- 27: Gewichtsauflage
- 28: Kippachse
- 29: Krafteinleitungspunkt von 41
- 30: abgewinkeltes Ende von 27
- 31, 31': Lastaufnehmer
- 32: Waagengehäuse
- 33: rückwärtiger Dichtrand von 31
- 34: Dichtung
- 35, 35': Aufnehmerachse
- 36: Anschlag von 35
- 37: Aktuatoranschlag
- 38: Anschlag
- 39, 39': Transportsicherung
- 40, 40': Öffnung
- 41, 41': Wägesystem
- 42: Überlastsicherung
- 43: Lastübertragungshebel

## Patentansprüche

1. Waage, die als eine Präzisions- oder Analysenwaage ausgebildet ist, mit mindestens einer einen Antrieb aufweisenden Verstelleinrichtung, wobei der Antrieb (4, 4') der Verstelleinrichtung (2, 2', 2'', 2''', 2'''') als ein fluidischer Antrieb ausgebildet ist,
**dadurch gekennzeichnet,**
**dass** der Antrieb (4, 4')innehalb des Waagengehäuses (32) angeordnet und über einen Druckanschluss (7) von einer außerhalb der Waage (1) angeordneten Druckquelle mit Druck beaufschlagbar ist.

2. Waage nach Anspruch 1,
**dadurch gekennzeichnet,**
**dass** der Antrieb (4') als ein einseitiger, gegen eine Feder (17', 17", 17''', 17'''', 18, 18') arbeitender Druckzylinder (5', 5'', 5''', 5'''') mit einem längsverschieblichen Aktuator (3', 3'', 3''', 3'''') ausgebildet ist.

3. Waage nach Anspruch 1,
**dadurch gekennzeichnet,**
**dass** der Antrieb (4) als ein zweiseitiger Druckzylinder (5) mit einem längsverschieblichen Aktuator (3) ausgebildet ist.

4. Waage nach einem der Ansprüche 1 bis 3,
**dadurch gekennzeichnet,**
**dass** dem Antrieb (4, 4') mindestens ein Steuerventil (19) vorgelagert ist.

5. Waage nach einem der Ansprüche 1 bis 4,
**dadurch gekennzeichnet,**
**dass** der Antrieb (4, 4') mindestens mit einem Dämpfungsglied gekoppelt ist.

6. Waage nach Anspruch 5,
**dadurch gekennzeichnet,**
**dass** das Dämpfungsglied als ein Drosselventil (20) ausgebildet ist.

7. Waage nach einem der Ansprüche 4 bis 6,
**dadurch gekennzeichnet,**
**dass** zur Erkennung von Endlagen der Verstelleinrichtung (2) mindestens ein Positionssensor vorgesehen ist.

8. Waage nach einem der Ansprüche 1 bis 7,
**dadurch gekennzeichnet,**
**dass** die Position des Aktuators (3) der Verstelleinrichtung (2) in Abhängigkeit von der Zeit bestimmt wird.

9. Waage nach einem der Ansprüche 1 bis 8,
**dadurch gekennzeichnet,**
**dass** die Verstelleinrichtung (2) zum Bewegen eines Wandelementes (21) eines Windschutzes ausgebildet ist.

10. Waage nach einem der Ansprüche 1 bis 9,
**dadurch gekennzeichnet,**
**dass** die Verstelleinrichtung (2") zum Verstellen mindestens eines Gewichtes (25) in einer Gewichtsschaltung (26) ausgebildet ist.

11. Waage nach Anspruch 10,
**dadurch gekennzeichnet,**
**dass** das Gewicht (25) auf einer Gewichtsauflage (26) aufliegt, die durch die Verstelleinrichtung (2'') absenkbar und/oder anhebbar ist, wobei das Gewicht (25) auf einen Krafteinleitungspunkt (29) der Waage (1) ablegbar ist.

12. Waage nach Anspruch 11,
**dadurch gekennzeichnet,**
**dass** die Gewichtsauflage (26) durch Kippen um eine Kippachse (28) absenkbar und/oder anhebbar ist.

13. Waage nach einem der Ansprüche 1 bis 12,
**dadurch gekennzeichnet,**
**dass** ein Lastaufnehmer (31) in einer Spülstellung von dem Aktuator (3''') der Verstelleinrichtung (2''') mit einem einem Waagengehäuse (32) zugewandten rückwärtigen Dichtrand (33) gegen eine zwischen Lastaufnehmer (31) und Waagengehäuse (32) angeordnete Dichtung (34) dichtend angedrückt wird.

14. Waage nach Anspruch 13,
**dadurch gekennzeichnet,**
**dass** der Lastaufnehmer (31) an seiner ihn tragenden Aufnehmerachse (35) einen Anschlag (36) aufweist, an den der Aktuator (3''') in der Waschstellung parallel zur Aufnehmerachse (35) ziehend anschlägt.

15. Waage nach einem der Ansprüche 1 bis 14,
**dadurch gekennzeichnet,**
**dass** die Verstelleinrichtung (2'''') als eine Transportsicherung (39) ausgebildet ist, die in einem drucklosen Zustand durch Federkraft die Waage (1'''') arretiert.

16. Waage nach Anspruch 15,
**dadurch gekennzeichnet,**
**dass** zum Arretieren der Aktuator (3'''') der Verstelleinrichtung (2'''') in eine entsprechende Öffnung (40) des Lastaufnehmers (31) arretierend eingreift.

17. Waage nach Anspruch 15,
**dadurch gekennzeichnet,**
**dass** zum Arretieren der Lastaufnehmer (31) von dem Aktuator (3'''') der Verstelleinrichtung (2''') gegen einen Anschlag drückbar ist.

18. Waage nach einem der Ansprüche 15 bis 16,
**dadurch gekennzeichnet,**
**dass** zum Arretieren der Aktuator (3'''') der Verstelleinrichtung (2'''') in eine entsprechende Öffnung (40') eines Lastübertragungshebels (42) eines Wägesystems (41') arretierend eingreift.

19. Waage nach einem der Ansprüche 15 bis 16,
**dadurch gekennzeichnet,**
**dass** zum Arretieren ein Lastübertragungshebel (42) eines Wägesystems (41') von dem Aktuator der Verstelleinrichtung gegen einen Anschlag gedrückt wird.

## Claims

1. Weighing machine constructed as a precision or analysis weighing machine, with at least one adjusting device comprising a drive, wherein the drive (4, 4') of the adjusting device (2, 2', 2", 2"', 2"") is constructed as a fluid drive, **characterised in that** the drive (4, 4') is arranged within the weighing machine housing (32) and can be acted on by pressure from a pressure source, which is arranged outside the weighing machine (1), by way of a pressure connection (7).

2. Weighing machine according to claim 1, **characterised in that** the drive (4') is constructed as a single-acting pressure cylinder (5', 5", 5"', 5""), which operates against a spring (17', 17", 17"', 17"", 18, 18'), with a longitudinally displaceable actuator (3', 3", 3"', 3"").

3. Weighing machine according to claim 1, **characterised in that** the drive (4) is constructed as a double-acting pressure cylinder (5) with a longitudinally displaceable actuator (3).

4. Weighing machine according to any one of claims 1 to 3, **characterised in that** at least one control valve (19) is arranged upstream of the drive (4, 4').

5. Weighing machine according to any one of claims 1 to 4, **characterised in that** the drive (4, 4') is coupled at least with a damping element.

6. Weighing machine according to claim 5, **characterised in that** the damping element is constructed as a throttle valve (20).

7. Weighing machine according to any one of claims 4 to 6, **characterised in that** at least one position sensor is provided for recognition of end positions of the adjusting device (2).

8. Weighing machine according to any one of claims 1 to 7, **characterised in that** the position of the actuator (3) of the adjusting device is determined in dependence on time.

9. Weighing machine according to any one of claims 1 to 8, **characterised in that** the adjusting device is constructed for movement of a wall element (21) of wind protection means.

10. Weighing machine according to any one of claims 1 to 9, **characterised in that** the adjusting device (2") is constructed for adjusting at least one weight (25) in a weight circuit (26).

11. Weighing machine according to claim 10, **characterised in that** the weight (25) rests on a weight support (27) which is lowerable and/or raisable by the adjusting device (2"), wherein the weight (25) can be placed on a force introduction point (29) of the weighing machine (1).

12. Weighing machine according to claim 11, **characterised in that** the weight support (27) is lowerable and/or raisable by tilting about a tilt axis (28).

13. Weighing machine according to any one of claims 1 to 12, **characterised in that** a load pick-up (31) in a washing setting is sealingly urged by a rearward sealing edge (33), which faces the weighing housing (32), against a seal (34), which is arranged between load pick-up (31) and weighing housing (32), by the actuator (3"') of the adjusting device (2'")

14. Weighing machine according to claim 13, **characterised in that** the load pick-up (31) has at its supporting pick-up axle (35) an abutment (36) against which the actuator (3"') in the washing setting parallel to the pick-up axle (35) abuts by being drawn.

15. Weighing machine according to any one of claims 1 to 14, **characterised in that** the adjusting device (2"') is constructed as transport securing means (39) which in a pressure-free state locks the weighing machine (1"") by spring force.

16. Weighing machine according to claim 15, **characterised in that**, for the locking, the actuator (3"") of the adjusting device (2"") lockingly engages in a corresponding opening (40) of the load pick-up (31).

17. Weighing machine according to claim 15, **characterised in that**, for the locking, the load pick-up (31) can be pressed by the actuator (3"") of the adjusting device (2"") against an abutment.

18. Weighing machine according to one of claims 15 and 16, **characterised in that**, for the locking, the actuator (3"") of the adjusting device (2"") lockingly engages in a corresponding opening (40') of a load transmission lever (42) of the weighing system (41').

19. Weighing machine according to one of claims 15 and 16, **characterised in that**, for the locking, a load transmission lever (42) of a weighing system (41') is urged by the actuator of the adjusting device against an abutment.

## Revendications

1. Balance, qui est conçue sous la forme d'une balance de précision ou d'analyse, avec au moins un dispositif de réglage présentant un entraînement, où l'entraînement (4, 4') du dispositif de réglage (2, 2', 2'', 2''', 2'''') est conçu sous la forme d'un entraînement fluidique,
**caractérisée en ce**
**que** l'entraînement (4, 4') est disposé à l'intérieur du boîtier de la balance (32) et peut être soumis à une pression par un raccordement de pression (7) à une source de pression disposée à l'extérieur de la balance (1).

2. Balance selon la revendication 1,
**caractérisée en ce**
**que** l'entraînement (4') est conçu sous la forme d'un cylindre de pression (5', 5'', 5''', 5'''') travaillant dans un sens, à l'encontre d'un ressort (17, 17'', 17''', 17'''', 18, 18') avec un actionneur (3', 3'', 3''', 3'''') pouvant être déplacé dans le sens longitudinal.

3. Balance selon la revendication 1,
**caractérisée en ce**
**que** l'entraînement (4) est conçu sous la forme d'un cylindre de pression (5) à deux sens avec un actionneur (3) pouvant se déplacer longitudinalement.

4. Balance selon l'une des revendications 1 à 3,
**caractérisée en ce**
**qu'**au moins une soupape de réglage (19) est placée avant l'entraînement (4, 4').

5. Balance selon l'une des revendications 1 à 4,
**caractérisée en ce**
**que** l'entraînement (4, 4') est couplé avec au moins un organe d'amortissement.

6. Balance selon la revendication 5,
**caractérisée en ce**
**que** l'organe d'amortissement est conçu sous la forme d'une soupape d'étranglement (20).

7. Balance selon l'une des revendications 4 à 6,
**caractérisée en ce**
**qu'**au moins un capteur de position est prévu pour la détection de positions définitives du dispositif de réglage (2).

8. Balance selon l'une des revendications 1 à 7,
**caractérisée en ce**
**que** la position de l'actionneur (3) du dispositif de réglage (2) est déterminée en fonction du temps.

9. Balance selon l'une des revendications 1 à 8,
**caractérisée en ce**
**que** le dispositif de réglage (2) est conçu pour le déplacement d'un élément de paroi (21) d'un écran de protection contre le courant d'air.

10. Balance selon l'une des revendications 1 à 9,
**caractérisée en ce**
**que** le dispositif de réglage (2'') est conçu pour le réglage d'au moins un poids (25) dans une échelle de sélection de poids (26).

11. Balance selon la revendication 10,
**caractérisée en ce**
**que** le poids (25) repose sur un support de poids (26), qui peut être descendu et/ou monté par le dispositif de réglage (2''), où le poids (25) peut être déposé sur un point d'application d'une force (29) de la balance (1).

12. Balance selon la revendication 11,
**caractérisée en ce**
**que** le support de poids (26) peut être descendu et/ou monté par le pivotement autour d'un axe de rotation (28).

13. Balance selon l'une des revendications 1 à 12,
**caractérisée en ce**
**qu'**un capteur de charge (31) dans une position de purge est pressé de manière étanche contre un joint (34) disposé entre le capteur de charge (31) et le boîtier de balance (32) par l'actionneur (3''') du dispositif de réglage (2''') avec un bord de joint (33) arrière orienté vers le boîtier de balance (32).

14. Balance selon la revendication 13,
**caractérisée en ce**
**que** le capteur de charge (31) présente une butée (36) sur son axe de réception (35) porteur, sur lequel l'actionneur (3''') bute en tirant parallèlement par rapport à l'axe de réception (35) dans la position de lavage.

15. Balance selon l'une des revendications 1 à 14,
**caractérisée en ce**
**que** le dispositif de réglage (2'''') est conçu sous la forme d'un système de protection pour le transport (39), qui place la balance (1'''') en butée par une force de ressort lorsqu'il n'y a aucune pression.

16. Balance selon la revendication 15,
**caractérisée en ce**
**que**, pour assurer la butée, l'actionneur (3'''') du dispositif de réglage (2'''') se met en prise en butée dans une ouverture (40) appropriée du capteur de charge (31).

17. Balance selon la revendication 15,
**caractérisée en ce**
**que**, pour assurer la butée, le capteur de charge (31) peut être comprimé contre une butée par l'actionneur (3''') du dispositif de réglage (2'''').

18. Balance selon l'une des revendications 15 à 16,
**caractérisée en ce**
**que**, pour assurer la butée, l'actionneur (3'''') du dispositif de réglage (2'''') se met en prise en butée dans une ouverture (40') appropriée d'un levier de transmission de charge (42) d'un système de balance (41').

19. Balance selon l'une des revendications 15 à 16,
**caractérisée en ce**
**que**, pour assurer la butée, un levier de transmission de charge (42) d'un système de balance (41') est comprimé contre une butée par l'actionneur du dispositif de réglage.
